# EUROPEAN PATENT APPLICATION

(11) **EP 4 358 206 A1**
(43) Date of publication of application: **24.04.2024**
(21) Application number: 22890451.2
(22) Date of filing: 04.11.2022
(51) Int. Cl.: H01M 10/04, H01M 10/0587, H01M 50/586

(54) **ELECTRODE ASSEMBLY FOR SECONDARY BATTERY, AND SECONDARY BATTERY INCLUDING COMPRISING SAME**

(30) Priority: 05.11.2021 KR 20210151798
(71) Applicant: LG Energy Solution, Ltd., Seoul 07335 (KR)
(72) Inventor: HAN, In Kee, Daejeon 34122 (KR); SUNG, Joo Hwan, Daejeon 34122 (KR); BOK, Cheon Hee, Daejeon 34122 (KR); LEE, Joonghoon, Daejeon 34122 (KR); MOON, Minkook, Daejeon 34122 (KR); KIM, Eun Young, Daejeon 34122 (KR)
(74) Representative: Goddar, Heinz J.
(86) International application number: PCT/KR2022/017258
(87) International publication number: WO 2023/080720

(57) **Abstract**

The present disclosure relates to an electrode assembly for a secondary battery, in which:
wherein the electrode assembly has a structure in which a stacked body including a sheet-like positive electrode, a sheet-like negative electrode, and a sheet-like separator interposed between the sheet-like positive electrode and the sheet-like negative electrode is wound, and
wherein the electrode assembly includes a nonwoven fabric having a porous structure more inside than the sheet-like positive electrode based on the stacking direction of a stacked body in a region including a portion corresponding to one end of the sheet-like positive electrode located in a core in a state where the electrode assembly is wound, and a secondary battery including the same.

## Description

### [TECHNICAL FIELD]

### Cross Citation with Related Application(s)

This application claims the benefit of Korean Patent Application No. 10-2021-0151798 filed on November 5, 2021, and Korean Patent Application No. 10-2022-0145742 filed on November 4, 2022 with the Korean Intellectual Property Office, the entire contents of which are incorporated herein by reference.

The present disclosure relates to an electrode assembly for secondary battery and a secondary battery including the same.

### [BACKGROUND]

With the technology development and increased demand for mobile devices, demand for secondary batteries as energy sources has been rapidly increasing. Among such secondary batteries is a lithium secondary battery exhibiting a high energy density and operating voltage, a long cycle lifespan, and a low self-discharge rate, which is now commercialized and widely used.

Also, recently, as interest in environmental issues grows, studies are frequently conducted on an electric vehicle (EV), a hybrid electric vehicle (HEV), etc. which can replace a vehicle using fossil fuels such as a gasoline vehicle and a diesel vehicle, which are one of the main causes of air pollution. A lithium secondary battery having high energy density, discharge voltage and output stability is mainly studied and used as a power source for the electric vehicle (EV), the hybrid electric vehicle (HEV) and the like.

Such a lithium secondary battery is generally manufactured by stacking or winding electrodes of positive electrode and negative electrode with a separator interposed therebetween, and incorporating them together with an electrolyte solution in a battery case.

At this time, secondary batteries are classified into cylindrical, prismatic, and pouch-type secondary batteries according to the types of the battery case, and the shape of the electrode assembly is also classified according to the type of the case.

Specifically, the electrode assembly in a wound state is mainly applied to a cylindrical or prismatic type. For example, a jelly-roll type electrode assembly or a stack-folding type electrode assembly is applied.

Particularly, for a cylindrical battery, an internal short circuit occurs during a charging and discharging process in a recent model having a positive electrode free-edge structure, which results in a problem that charging and discharging are interrupted. Here, the positive electrode free-edge structure means a shape in which the positive electrode tab is not formed at one end, but formed on the intermediate part of the positive electrode sheet.

Conventionally, in order to solve such a problem, attempts were made to prevent an internal short circuit by increasing the thickness of the separator, but as the overall thickness increases, there is a problem that output characteristics deteriorates due to an increase in resistance.

Therefore, there is a need to develop a technology that can solve all these problems.

### [DETAILED DESCRIPTION OF THE INVENTION]

### [Technical Problem]

It is an object of the present disclosure to provide an electrode assembly that can prevent internal short circuits due to charging and discharging while minimizing degradation in output characteristics, and a secondary battery including the same.

### [Technical Solution]

According to one embodiment of the present disclosure, there is provided an electrode assembly for a secondary battery, in which: wherein the electrode assembly has a structure in which a stacked body including a sheet-like positive electrode, a sheet-like negative electrode, and a sheet-like separator interposed between the sheet-like positive electrode and the sheet-like negative electrode is wound, and wherein the electrode assembly includes a nonwoven fabric having a porous structure more inside than the sheet-like positive electrode based on the stacking direction of a stacked body in a region including a portion corresponding to one end of the sheet-like positive electrode located in a core in a state where the electrode assembly is wound. Specifically, the nonwoven fabric having a porous structure may be formed only at a portion corresponding to one end of the sheet-like positive electrode located at the core in a state where the electrode assembly is wound.

At this time, a portion corresponding to one end of the sheet-like positive electrode may be an entire region of an edge of the one end or two vertex regions of the one end. Specifically, the portion corresponding to one end of the sheet-like positive electrode may be a portion that extends 0.5 mm to 10 mm to both sides from the edge of one end of the sheet-type positive electrode, respectively, or a portion that extends 0.5 mm to 10 mm in the vertical and horizontal directions from two vertices of the one end, respectively.

In one embodiment, the sheet-like separator includes a base substrate, and the nonwoven fabric having a porous structure may be formed between the sheet-like separator and the sheet-like positive electrode in the region including a portion corresponding to one end of the sheet-like positive electrode located in the core in a state where the electrode assembly is wound.

At this time, the nonwoven fabric having the porous structure may be formed to a thickness of 0.1 to 20 *µ*m.

In another embodiment, the sheet-like separator includes a base substrate, and the nonwoven fabric having a porous structure may have a structure formed by replacing the base substrate with the nonwoven fabric having a porous structure in the region including a portion corresponding to one end of the sheet-like positive electrode located in the core in a state where the electrode assembly is wound.

At this time, the base substrate may be a porous film including any one or a mixture of two or more selected from the group consisting of a polyolefin-based resin, a fluorine-based resin, a polyester-based resin, a polyacrylonitrile resin, a cellulose-based material and a copolymer thereof, or a structure in which an organic-inorganic mixed layer is formed on such a porous film.

Further, the nonwoven fabric having a porous structure may be a nonwoven fabric of any one or a mixture of two or more selected from the group consisting of polyethylene terephthalate and polyester. Meanwhile, the sheet-like positive electrode may include a non-coated part not coated with an active material and a positive electrode tab formed on the non-coated part. Specifically, the positive electrode tab may be located in the intermediate part of the sheet-like positive electrode.

According to another embodiment of the present disclosure, there is provided a secondary battery comprising the electrode assembly, and a battery case in which the electrode assembly is incorporated together with an electrolyte solution.

At this time, the secondary battery may be a cylindrical or prismatic secondary battery.

### [BRIEF DESCRIPTION OF THE DRAWINGS]

Fig. 1 is a schematic view before winding an electrode assembly according to an embodiment of the present disclosure;
Fig. 2 is a side view according to one embodiment of the sheet-like separator of Fig. 1;
Fig. 3 is a side view according to another example of the sheet-like separator of Fig. 1; and
Fig. 4 is a schematic diagram before winding an electrode assembly according to another embodiment of the present disclosure.

### [DETAILED DESCRIPTION OF THE EMBODIMENTS]

The terms and words used in the present specification and claims should not be interpreted as being limited to typical meanings or dictionary definitions, but should be interpreted as having meanings and concepts relevant to the technical scope of the present disclosure based on the rule according to which an inventor can appropriately define the terms and words as terms for describing most appropriately the best method the inventor knows for carrying out the invention. Accordingly, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed, and the scope of the present invention is not limited to the embodiments described below.

Hereinafter, the present disclosure will be described in detail with reference to the accompanying drawings. The terms or words used in the present specification and claims should not be construed as being limited to typical meanings or dictionary definitions, and the present disclosure should be construed with meanings and concepts that are consistent with the technical idea of the present disclosure based on the principle that the inventors may appropriately define concepts of the terms to appropriately describe their own disclosure in the best way.

Further, the embodiments described herein and the configurations shown in the drawings are only most preferable embodiments of the present disclosure and do not represent the entire spirit of the present disclosure, so it should be appreciated that there may be various equivalents and modifications that can replace the embodiments and the configurations at the time at which the present application is filed.

According to an embodiment of the present disclosure, there is provided an electrode assembly for a secondary battery, in which:
wherein the electrode assembly has a structure in which a stacked body including a sheet-like positive electrode, a sheet-like negative electrode, and a sheet-like separator interposed between the sheet-like positive electrode and the sheet-like negative electrode is wound, and
wherein the electrode assembly includes a nonwoven fabric having a porous structure more inside than the sheet-like positive electrode based on the stacking direction of a stacked body in a region including a portion corresponding to one end of the sheet-like positive electrode located in a core in a state where the electrode assembly is wound.

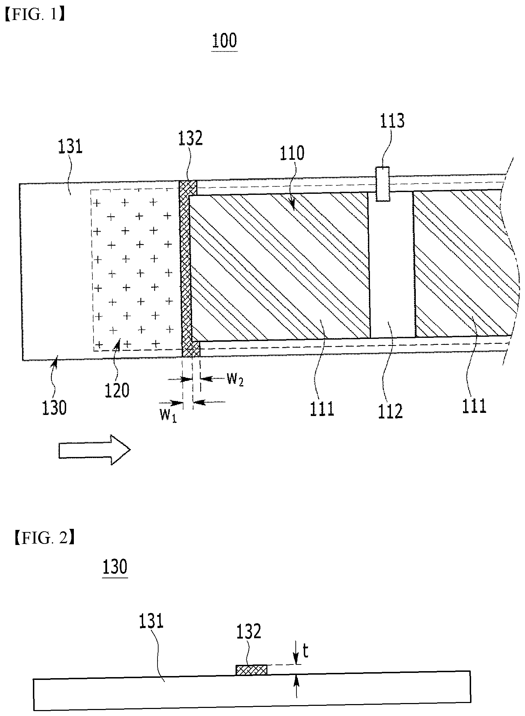

Fig. 1 is a schematic view before winding an electrode assembly according to an embodiment of the present disclosure.

Referring to Fig. 1, the electrode assembly 100 for a secondary battery has a structure in which a staked body including a sheet-like positive electrode 110, a sheet-like negative electrode 120, and a sheet-like separator 130 interposed between the sheet-like positive electrode 110 and the sheet-like negative electrode 120 is wound in the direction of an arrow.

At this time, the sheet-like positive electrode 110 includes a coated part 111 coated with an active material and a non-coated part 112 not coated with an active material, and has a structure in which a positive electrode tab 113 is formed on the non-coated part 112. At this time, the non-coated part 112 may be located in the intermediate part of the sheet-like positive electrode 110. Here, the intermediate part is a concept including all structures in which the non-coated part 112 is not formed at both ends and the non-coated part 112 is interposed between the coated parts 111.

The sheet-like negative electrode 120 may be formed larger in length and width than the sheet-like positive electrode 110, and is stacked so as to face each other with the sheet-like positive electrode 110 and the sheet-like separator 130 interposed therebetween.

Meanwhile, the electrode assembly 100 according to the present disclosure include a nonwoven fabric 132 having a porous structure more inside than the sheet-like positive electrode 110, that is, in the portion facing the sheet-like separator 130, based on the stacking direction of the stacked body in a region including a portion corresponding to one end of the sheet-like positive electrode 110 located in a core, when the electrode assembly is wound. That is, the nonwoven fabric 132 having a porous structure is included in a region including a portion corresponding to one end of the sheet-like positive electrode 110 at a portion where winding starts.

That is, the formation width of the nonwoven fabric is not limited as long as it includes only one end of the sheet-like positive electrode 110. However, considering the price, battery performance, and safety, specifically, it may be included only in a portion corresponding to one end of the sheet-like positive electrode 110.

At this time, the portion corresponding to one end of the sheet-like positive electrode 110 is the entire region of the edge of the one end, and specifically, it refers to a portion extending to both sides from the edge of one end of the sheet-like positive electrode 110. The respective extension lengths w1 and w2 may be, for example, 0.5 mm to 10 mm, specifically 1 mm to 3 mm.

If it is formed in a range that is too wide outside the above range, resistance may increase in this part, which may cause deterioration in output characteristics. If it is formed in too thin a range, the effect intended by the present disclosure cannot be sufficiently achieved, which is not preferable.

In addition, the nonwoven fabric 132 having a porous structure may specifically be formed, in one example, in a form of forming between the base substrate constituting the sheet-like separator 130 and the sheet-like positive electrode 110, or may be formed, in another example, in the form of substituting the base substrate.

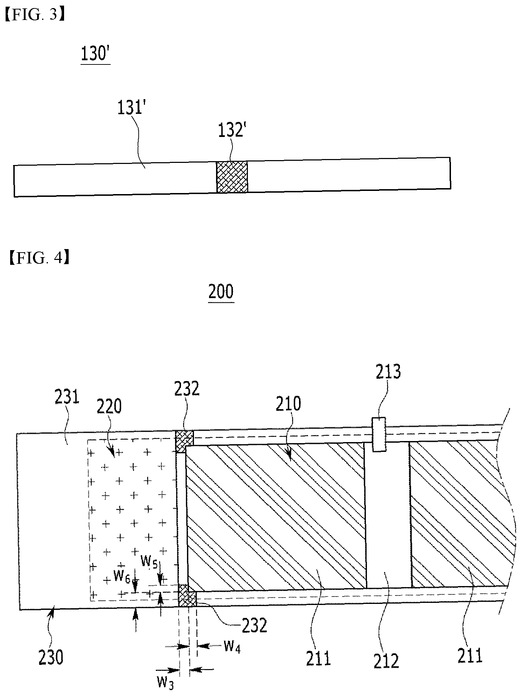

In order to explain such a structure in more detail, Figs. 2 and 3 show a side view of the sheet-like separator 130 in order to schematically show the shape of including the nonwoven fabric having a porous structure.

First, in one example, referring to Fig. 2 together with Fig, 1, the sheet-like separator 130 is composed of a base substrate 131, and includes a nonwoven fabric 132 having a structure formed between the base substrate 131 and the sheet-like positive electrode 110 in a region including a portion corresponding to one end of the sheet-like positive electrode 110 located on the core in a state in which the electrode assembly 100 is wound. For convenience of understanding, the nonwoven fabric 132 having a porous structure is shown in the form of being formed on the base substrate 131. At this time, the base substrate 131 and the nonwoven fabric 132 having a porous structure may be simply adhered by an adhesive, or it may be attached by hot rolling, etc., and the method of attachment is not limited. Conversely, it may be formed inside the sheet-like positive electrode 110, it is not limited as long as it is a structure formed between the sheet-like separator 130 and the sheet-like positive electrode 110.

At this time, the thickness t of the nonwoven fabric 132 having a porous structure may be 1.0 to 20.0 *µ*m, and in detail, 1.0 to 15.0 *µ*m.

If it is formed too thin outside the above range, sufficient stiffness cannot be obtained, which makes it difficult to fully exhibit the effect intended by the present disclosure. If it is formed too thick, it increases in volume, which is not preferable.

Next, as another example, referring to Fig. 3 together with Fig. 1, the sheet-like separator 130' includes a base substrate 131', and the nonwoven fabric 132' having a porous structure has a structure formed by replacing the base substrate 132 with the nonwoven fabric 132' having a porous structure in the region including a portion corresponding to one end of the sheet-like positive electrode located in the core in a state where the electrode assembly 100 is wound.

Regardless of any structure, the base substrate can be selected within a thickness range known in the art, and may be specifically 5 to 300 *µ*m.

The base substrate is not limited as long as it can be used as a conventional separator substrate, but for example, it may be a porous film containing any one or a mixture of two or more selected from the group consisting of a polyolefin-based resin, a fluorine-based resin, a polyester-based resin, a polyacrylonitrile resin, a cellulose-based material, and a copolymer thereof.

More specifically, it may be a polyolefin-based resin, and specifically, it may be formed of polyethylene such high density polyethylene (HDPE), low density polyethylene (LDPE), linear low density polyethylene (LLDPE), ultra-high molecular weight polyethylene (UHMWPE); polypropylene; polybutylene; polypentene; copolymers of two or more of ethylene, propylene, butene, pentene, 4-methylpentene, hexene, and octene; or a mixture thereof, but is not limited thereto.

Alternatively, the base substrate may have a structure in which an organic-inorganic mixed layer is formed on the porous film as described above.

The organic-inorganic mixed layer may include at least one selected from the group consisting of (a) inorganic particles having a dielectric constant of 1 or more, (b) inorganic particles having piezoelectricity, (c) thermally conductive inorganic particles, and (d) inorganic particles having a capability of transferring lithium ion.

The inorganic particles having piezoelectricity means materials that are an insulator at atmospheric pressure, but have electrical properties due to internal structural change when a certain pressure is applied. The inorganic particles are materials that not only exhibit high dielectric constant characteristics with a dielectric constant of 100 or more, but also generate an electric charge when a certain pressure is applied and stretched or compressed, so that one side is positively charged and the other side is negatively charged, respectively, thereby having a function of generating a potential difference between both sides.

Examples of the inorganic particles having piezoelectricity include BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT) hafnia (H_{f}O₂) or a mixture thereof, but are not limited thereto.

The inorganic particles having a capability of transferring lithium ion refer to inorganic particles that contain lithium elements but do not store lithium and have a function of moving lithium ions.

Examples of the inorganic particles having a capability of transferring lithium ion include (LiAlTiP)ₓO_{y} series glass (0<x<4, 0<y<13) such as lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), 14Li₂O-9Al₂O₃-38TiO₂-39P₂O₅, lithium lanthanum titanate (LiₓLa_{y}TiO₃, 0<x<2, 0<y<3), lithium germanium sulfide (LiₓGe_{y}P_{z}S_{w}, 0<x<4, 0<y<1, 0<z<1, 0<w<5) such as Li_{3.25}Ge_{0.25}P_{0.75}S₄, lithium alloy (Li ₓN _{y}, 0<x<4, 0<y<2) such as Li₃N, SiS₂ series glass (LiₓSi_{y}S_{z}, 0<x<3, 0<y<2, 0<z<4) such as Li₃PO₄-Li₂S-SiS₂, P₂S₅ series glass (LiₓP_{y}S_{z}, 0<x<3, 0<y<3, 0<z<7) such as LiI-Li₂S-P₂S₅, mixtures thereof, etc., but are not limited thereto.

In addition, examples of inorganic particles having a dielectric constant of 1 or more include SrTiO₃, SnO₂, CeO₂, MgO, NiO, CaO, ZnO, ZrO₂, Y₂O₃, Al₂O₃, TiO₂, SiC or mixtures thereof, etc., but are not limited thereto.

The thermally conductive inorganic particles are materials that provide low thermal resistance but do not provide electrical conductivity and thus have insulating properties, and examples thereof include at least one selected from the group consisting of aluminum nitride (AlN), boron nitride (BN), alumina (Al₂O₃), silicon carbide (SiC), and beryllium oxide (BeO), but are not limited thereto.

The above-mentioned high dielectric constant inorganic particles, piezoelectric inorganic particles, thermally conductive inorganic particles, and inorganic particles having a capability of transferring lithium ion can be mixed and used.

The size of the inorganic particles is not limited, but is preferably in the range of 0.001 to 10 *µ*m as much as possible for an appropriate porosity between the inorganic particles. When the size is less than 0.001 *µ*m, dispersibility is reduced, which makes it difficult to adjust physical properties when preparing an organic-inorganic mixed layer. If the size exceeds 10 *µ*m, the thickness increases and mechanical properties deteriorate. In addition, due to the excessively large pore size, the anti-corrosion function cannot be sufficiently performed, and the probability of internal short circuit occurring during charging and discharging of the battery increases.

The content of the inorganic particles is not particularly limited, but is preferably in the range of 1 to 99% by weight, more preferably 10 to 95% by weight, based on 100% by weight of the mixture of the inorganic particles and the binder polymer. When the content is less than 1% by weight, the content of the polymer is excessively high, which can reduce the pore size and porosity due to the decrease in empty space formed between the inorganic particles. Conversely, if the content exceeds 99% by weight, the polymer content is too small, which deteriorates the final mechanical properties due to weakening of the adhesion between inorganic materials.

At this time, the pore size and porosity can be adjusted together by adjusting the size and content of inorganic particles.

Further, the organic-inorganic mixed layer composed of the inorganic particles and the binder polymer is robust even under high-temperature conditions due to the heat resistance of the inorganic particles. Therefore, it is effective in preventing a short circuit even under excessive conditions due to internal or external factors such as high temperature, overcharging, and external shock, and can delay thermal runaway due to the heat absorbing effect of the inorganic particles.

The binder polymer is not limited as long as it does not cause a side reaction with the electrolytic solution. In particular, one having a glass transition temperature(Tg) as low as possible can be used, and is preferably in the range of -200 to 200°C.

Examples of such binder polymers include polyvinylidene fluoride-co-hexafluoropropylene, polyvinylidene fluoride-cotrichloroethylene, polymethylmethacrylate, polyacrylonitrile, polyvinylpyrrolidone, polyvinyl acetate, polyethylene-co-vinyl acetate, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, acrylonitrile-styrene-butadiene copolymer, polyimide or mixture thereof, etc., but are not limited thereto. Any material may be used alone or in combination as long as it has the above-mentioned properties.

Meanwhile, the nonwoven fabric having a porous structure is more preferably a material capable of improving mechanical strength than the base substrate, and examples thereof include, but limited thereto, a nonwoven fabric of any one or a mixture of two or more selected from the group consisting of polyethylene terephthalate and polyester.

In this manner, when a nonwoven fabric having a porous structure is included in a region including a portion corresponding to one end of the sheet-like positive electrode located in the core in a state where the electrode assembly is wound, not only the mechanical strength is improved in this part, thereby preventing the end of the sheet-like positive electrode from penetrating the sheet-like separator to occur an internal short circuit in contact with the negative electrode, but also it is formed in a porous structure, which can minimize degradation of the movement of lithium ions in the electrolyte solution.

Moreover, the position is limited to prevent an increase in resistance, and the problem of deterioration in output characteristics.

Further, Fig. 4 is a schematic diagram before winding an electrode assembly according to another embodiment of the present disclosure.

Referring to Fig. 4, there is a difference in the formation form of the nonwoven fabric 232 having a porous structure in comparison with Fig. 1.

Specifically, the electrode assembly 200 for a secondary battery has a structure in which a stacked body including a sheet-like positive electrode 210, a sheet-like negative electrode 220, and a sheet-like separator 230 interposed between the sheet-like positive electrode 210 and the sheet-like negative electrode 220 is wound in the direction of the arrow.

At this time, the sheet-like positive electrode 210 includes a coated part 211 coated with an active material and a non-coated part 212 not coated with an active material, and has a structure in which a positive electrode tab 213 is formed on the non-coated part 212. At this time, the non-coated part 212 may be located in the intermediate part of the sheet-like positive electrode 210. Here, the intermediate part means that the non-coated part 212 is not formed at both ends, and is a concept including all structures in which the non-coated part 212 is interposed between the coated parts 211.

Meanwhile, when the electrode assembly 200 is wound, it includes a nonwoven fabric 232 having a porous structure on the inside of the sheet-like positive electrode 210, that is, a portion facing the sheet-like separator 230, based on the stacking direction of the stacked body in the region including a portion corresponding to one end of the sheet-like positive electrode 210 located in the core. At this time, the portion corresponding to one end of the sheet-like positive electrode 210 may be two vertex regions of the one end. Specifically, it refers to a portion extending in the vertical and horizontal directions from the vertex of one end of the sheet-like positive electrode 210, respectively, and the extension lengths w3, w4, w5, and w6 may be, for example, 0.5 mm to 10 mm, specifically 1 mm to 3 mm.

If it is formed in a range that is too wide outside the above range, resistance may increase in this part, which causes deterioration in output characteristics. If it is formed in too thin a range, the effect intended by the present disclosure cannot be sufficiently achieved, which is not preferable.

At this time, the nonwoven fabric 232 having a porous structure is also, in one example, in the form formed between the base substrate constituting the sheet-like separator 230 and the sheet-like positive electrode 210, or in another example, in the form of substituting the base substrate, and thus, details thereof are as described above.

Meanwhile, according to another embodiment of the present disclosure, there is provided a secondary battery comprising the electrode assembly and a battery case in which the electrode assembly is incorporated together with an electrolyte solution.

In this case, the secondary battery is not limited as long as it has a shape in which the electrode assembly can be incorporated, but may be a cylindrical or prismatic secondary battery.

Other manufacturing methods and components of the secondary battery are known in the art, and thus, the description thereof is omitted herein, and is included in the scope of the present disclosure.

Although the exemplary embodiments of the present disclosure have been disclosed for illustrative purposes, those skilled in the art will appreciate that various modifications, additions and substitutions are possible, without departing from the scope and spirit of the invention as disclosed in the accompanying claims.

### [Industrial Applicability]

The electrode assembly according to the present disclosure includes a nonwoven fabric having a porous structure inside the sheet-like positive electrode in a region including a portion corresponding to one end of the sheet-like positive electrode located on the core in a state where the electrode assembly is wound, whereby it is possible to prevent an internal short circuit between the positive electrode and the negative electrode while minimizing deterioration in output characteristics of the secondary battery including the same, thereby improving the safety.

## Claims

1. An electrode assembly for a secondary battery, in which:
wherein the electrode assembly has a structure in which a stacked body including a sheet-like positive electrode, a sheet-like negative electrode, and a sheet-like separator interposed between the sheet-like positive electrode and the sheet-like negative electrode is wound, and
wherein the electrode assembly includes a nonwoven fabric having a porous structure more inside than the sheet-like positive electrode based on the stacking direction of a stacked body in a region including a portion corresponding to one end of the sheet-like positive electrode located in a core in a state where the electrode assembly is wound.

2. The electrode assembly according to claim 1, wherein:
the nonwoven fabric having a porous structure is formed only at a portion corresponding to one end of the sheet-like positive electrode located at the core in a state where the electrode assembly is wound.

3. The electrode assembly according to claim 1 or 2, wherein:
a portion corresponding to one end of the sheet-like positive electrode is an entire region of an edge of the one end or two vertex regions of the one end.

4. The electrode assembly according to claim 1 or 2, wherein:
the portion corresponding to one end of the sheet-like positive electrode is a portion that extends 0.5 mm to 10 mm to both sides from the edge of one end of the sheet-type positive electrode, respectively, or a portion that extends 0.5 mm to 10 mm in the vertical and horizontal directions from two vertices of the one end, respectively.

5. The electrode assembly according to claim 1, wherein:
the sheet-like separator includes a base substrate, and the nonwoven fabric having a porous structure is formed between the sheet-like separator and the sheet-like positive electrode in the region including a portion corresponding to one end of the sheet-like positive electrode located in the core in a state where the electrode assembly is wound.

6. The electrode assembly according to claim 5, wherein:
the nonwoven fabric having the porous structure is formed to a thickness of 0.1 to 20 *µ*m.

7. The electrode assembly according to claim 1, wherein:
the sheet-like separator includes a base substrate, and the nonwoven fabric having a porous structure has a structure formed by replacing the base substrate with the nonwoven fabric having a porous structure in the region including a portion corresponding to one end of the sheet-like positive electrode located in the core in a state where the electrode assembly is wound.

8. The electrode assembly according to claim 5 or 7, wherein:
the base substrate is a porous film including any one or a mixture of two or more selected from the group consisting of a polyolefin-based resin, a fluorine-based resin, a polyester-based resin, a polyacrylonitrile resin, a cellulose-based material and a copolymer thereof, or a structure in which an organic-inorganic mixed layer is formed on such a porous film.

9. The electrode assembly according to claim 1, wherein:
the nonwoven fabric having a porous structure is a nonwoven fabric of any one or a mixture of two or more selected from the group consisting of polyethylene terephthalate and polyester.

10. The electrode assembly according to claim 1, wherein:
the sheet-like positive electrode includes a non-coated part not coated with an active material and a positive electrode tab formed on the non-coated part.

11. The electrode assembly according to claim 1, wherein:
the positive electrode tab is located in the intermediate part of the sheet-like positive electrode.

12. A secondary battery comprising the electrode assembly as set forth in claim 1, and a battery case in which the electrode assembly is incorporated together with an electrolyte solution.

13. A secondary battery according to claim 12, wherein the secondary battery is a cylindrical or prismatic secondary battery.
